# EUROPEAN PATENT SPECIFICATION

(11) **EP 3 115 904 B1**
(45) Date of publication and mention of the grant of the patent: **28.02.2018**
(21) Application number: 15002008.9
(22) Date of filing: 06.07.2015
(51) Int. Cl.: G06F 12/0868, G06F 12/0897, G06F 12/123, G06F 12/12

(54) **METHOD FOR MANAGING A DISTRIBUTED CACHE**
VERFAHREN ZUR VERWALTUNG EINES VERTEILTEN CACHES
PROCÉDÉ DE GESTION D'UNE ANTÉMÉMOIRE DISTRIBUÉE

(43) Date of publication of application: 11.01.2017
(73) Proprietor: ALCATEL LUCENT, 92100 Boulogne-Billancourt (FR)
(72) Inventor: Gallo, Massimo, 91620 Nozay (FR); Perino, Diego, 91620 Nozay (FR); Saino, Lorenzo, London N79GU (GB)
(74) Representative: Berthier, Karine

(56) References cited:
- US-A1- 2014 201 448

## Description

### FIELD OF THE INVENTION

The invention relates to a method for managing a multiple level cache of a host.

The invention also concerns a computer program product comprising computer-executable instructions for performing the method and a computer readable medium having loaded thereupon such computer program.

### BACKGROUND OF THE INVENTION

Several existing solutions require packet-level caching capabilities. This is for instance the case of redundancy elimination or data deduplication services or Named Data Networking (NDN). Such services pose severe requirements on their caching system. In particular, they need to perform operations at packet level, sustain multi-Gbps line rate, provide terabytes (TB) of caching memory and ideally run on commodity hardware. However, existing caching solutions do not meet these requirements. They deploy caches in large data-centers to scale throughput and storage, or sustain limited throughput. Key value store designs either achieve high throughput on single Dynamic Random Access Memory (DRAM) technology, or provide large storage capacity on Hard Disk Drive (HDD) or Solid-State Drive (SSD) but they do not operate at wire speed.

Prior art techniques attempt to design a system targeting a two layers packet-level cache able to store several terabytes of data while serving requests at line rate. According to a first prior art technique, there is disclosed a high level hierarchical design tailored to video streaming applications over NDN and evaluate it by theoretical modeling and simulation. A second prior art technique discloses a preliminary design to an NDN forwarding engine and experimentally analyzes the read/write throughput only.

An example of another prior art technique is given in document US 2014/201448 which deals with a method for managing multiple level cache comprising a primary cache and a secondary cache which is a flash cache.

### SUMMARY OF THE INVENTION

The object of the present invention is to alleviate at least partly the above mentioned drawbacks, notably by providing a system taking into account the constraints imposed by the implementation environment and by proposing optimized data structures and indexing techniques for the management of the two caching layers.

In a first aspect, this aim is achieved with a method for managing a distributed cache of a host comprising a primary cache which is a volatile memory such as a DRAM memory and a secondary cache which is a non-volatile memory such as a SSD memory, the method comprising the steps of:
- dividing a content object into N segments, each of said N segments being composed of K consecutive packets, each of the N segments being identified by a segment identification data (segment_{ID}), said packets being stored in a first portion of said primary cache and/or in a second portion of said secondary cache, said first portion and said second portion being assigned to a corresponding processing core so that packets belonging to a same segment are always assigned to the same processing core,
- building a segment hash table in order to index the packets of said N segments stored in said first portion and/or in said second portion, the entries of said segment hash table being related to a DRAM segment map pointer and/or a SSD segment map pointer depending on which portion among said first portion and said second portion a corresponding packet is cached in, the DRAM segment map pointer being configured to point to the first portion storing the packets of a given segment, the SSD segment map pointer being configured to point to the second portion storing the packets of said_given segment, point to the second portion storing the packets of said_given segment, the DRAM segment map pointer of each of the N segments being managed as a DRAM-LRU linked list which is ordered, each of the DRAM segment map pointers containing a request counter for counting the number of times said given segment has been requested, the SSD segment pointer of each of the N segments being managed as a SSD-LRU linked list which is ordered,
- receiving a request from a requester and performing a look up in said segment hash table so as to determine if said segment identified by segment identification data (segment_{ID}) has already been built (i.e., if said segment identified by segment identification data is stored in the local cache of the host),
if said segment identification data has been computed in said segment hash table, said corresponding processing core checks whether the corresponding packet is stored in said first portion of said primary cache or in said second portion of said secondary cache,
- if the packet is stored in said first portion, said corresponding packet is sent back to said requester and said request counter is incremented, the DRAM segment map pointer entering in said DRAM-LRU linked list, the DRAM segment map pointer being prioritized by being moved on top of said linked DRAM-LRU list,
- packet is passed to an SSD core so as to copy the entire given segment from the secondary cache to the primary cache ; then said request is passed back to said corresponding processing core in order to create the DRAM segment map pointer for pointing to the first portion storing said corresponding packet so as to be entered in said DRAM-LRU linked list,the SSD segment map pointer being also entered in said SSD-LRU linked list, the DRAM segment map pointer and the SSD segment map pointer being respectively prioritized by being respectively moved on top of said DRAM-LRU linked list and said SSD-LRU linked list; then said corresponding packet is sent back to said requester.

According to an embodiment, the method further comprises:
- if the primary cache is full, evaluating the value of said request counter of the DRAM segment map pointer which is at the tail of said DRAM-LRU linked list,
- comparing the value of the request counter with a predetermined threshold T_{R},
- if the value is above said predetermined threshold, said packets of the entire segment pointed to by the DRAM segment map pointer are transferred from the primary cache to the secondary cache and the SSD segment map pointer is prioritized by being moved on top of said SSD-LRU linked list,
- if the value is below said predetermined threshold, the DRAM segment map pointer and said packets of the entire segment pointed to by the DRAM segment map pointer are respectively deleted from the primary cache and from said DRAM-LRU linked list.

According to an embodiment, the method comprises:
- if the secondary cache is full, the SSD segment map pointer of the segment to be deleted which is at the tail of said SSD-LRU linked list is deleted from said SSD-LRU linked list and from the entries of said segment hash table if there is no DRAM segment map pointer corresponding to the segment to be deleted in the DRAM-LRU linked list.

According to an embodiment, the method comprises:
- receiving a data and performing a lookup in said segment hash table so as to determine if said segment identified by segment identification data (segment_{ID}) has already been stored, if said segment identification data has not been computed in said segment hash table, an entry is created in said segment hash table and a corresponding DRAM segment map pointer is created so as to be entered and prioritized in said DRAM-LRU linked list by the assigned processing core.

According to an embodiment, the method comprises, when said corresponding packet is passed to an SSD core so as to copy the entire given segment comprising the said packet from the secondary cache to the primary cache, said corresponding segment is not removed from the secondary cache.

According to an embodiment, if said segment identification data has not been stored in said segment hash table, said request is forwarded to a next hop.

According to an embodiment, the primary cache is a DRAM memory and the secondary cache is a SSD memory.

According to an embodiment, said DRAM-LRU linked list and said SSD-LRU linked list are ordered according to a Least Recently Used policy.

According to an embodiment, the method comprises:
- each of the DRAM segment map pointers further containing pointers to previous and next segments in said DRAM-LRU linked list,
- each of the SSD segment map pointers further containing pointers to previous and next segments in said SSD-LRU linked list.

A second aspect of the invention provides a computer program product comprising computer-executable instructions for performing a method according to any of the embodiments herein mentioned.

A third aspect of the invention provides a computer readable medium having recorded thereon a computer program comprising program instructions, the computer program being loadable into a data-processing unit and adapted to cause execution of the method according to any of the embodiments herein mentioned when the computer program is run by the data-processing unit.

The dependent claims define various embodiments of the invention.

Further features and advantages of the invention will appear from the following description of embodiments of the invention, given as nonlimiting examples, with reference to the accompanying drawings listed hereunder.

### BRIEF DESCRIPTION OF THE DRAWING

Fig.1 represents a flowchart of an embodiment of the proposed method and system.
Fig. 2 illustrates the structure of content objects to identify packets.
Fig.3 illustrates the results of an experiment wherein the hit ratio is in function of the threshold for objects sizes of 1.5 MB and 15 MB.
Fig. 4 illustrates the results of an experiment wherein one single SSD memory is used.

### DETAILED DESCRIPTION OF THE INVENTION

Specific embodiments of the invention will now be described in detail with reference to the accompanying figures. Like elements in the various figures are denoted by like reference numerals for consistency.

In general, embodiments of the invention are directed at managing a multiple level cache of a host comprising a primary cache which is a volatile memory such as a DRAM memory and a secondary cache which is a non-volatile memory such as a SSD memory.

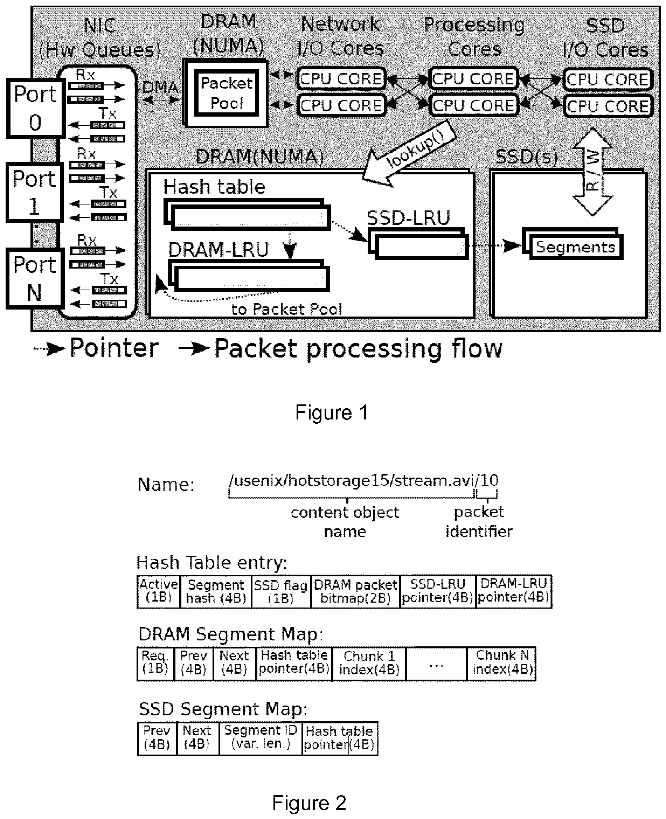

Figure 1 shows a packet processing flow implemented by a data storage system configuration (not shown) which is suitable for use by the invention. The data storage system configuration includes a data storage system assembly (not shown) and a host. The data storage assembly includes a set of storage devices (not shown) such as hard disk drives. The host includes a host control circuit, a primary cache and a secondary cache, a central processing unit (CPU). In one or more embodiments of the invention, the CPU is a hardware processor component for processing instructions of the host. The CPU may include multiple hardware processors. Alternatively or additionally, each hardware processor may include multiple processing cores. In general, the CPU is any device configured to execute instructions on the host.

A requester connected to the data storage system through the host (and possibly other NDN host machines) can obtain the data by sending a request to the data storage. The data storage assembly responds by retrieving the data from the set of storage devices and transmitting the data to the requester. The host control circuit of the host then caches the data in the primary cache.

If the host receives a new request for the same, the host may not need to re-read the data from the data storage assembly. Rather, the host control circuit can simply access the copied data residing within the primary cache or in the secondary cache. Accordingly, the host can avoid incurring the communication latencies and the overhead associated with re-reading the same data from the data storage assembly.

It should be understood that memory spaces within the primary cache and the secondary cache are resources which may be re-consumed for other operations. Accordingly, the host may encounter a situation in which it needs to re-access the data.

Two types of packets can be received by this data storage system configuration: request and data. As explained above, the first type is the request that a client uses to express an interest in a specific data and the second type is the data itself that satisfies the corresponding request. Both packets (request and data) contain the name of the packet, i.e. content object name plus packet identifier. The host control circuit includes cores (CPU) that work in poll mode in an asynchronous mode. Packets are passed among cores via dedicated per core software input queues in the shared memory with zero-copy. A core processes a new packet from the input queue when it has finished the processing of the previous packet.

The Hierarchical 2 level cache (H2C) divides content objects in N segments each composed of K consecutive packets. Segments are identified by a segment identification data segment_{ID} (i.e. content object name plus the integer part of packetid / N; the packetid, as illustrated in figure 2, is the sequential number of the packet composing the file). H2C performs operations at segment granularity rather than at packet granularity.

The main H2C data structure is a hash table used for indexing all the segments stored in a first portion of the primary cache and/or in a second portion of the secondary cache assigned to the corresponding processing core. It is implemented using an open-addressed hash table similar to those well known to the person skilled in the art. The hash table is configured so as to minimize access time. For this purpose, every hash table bucket contains multiple values avoiding chaining in case of collision (i.e., two items to be stored in the same bucket) and is dimensioned to a cache line. It is therefore possible to read all elements stored in a bucket with a single access to the memory. Bucket overflow is managed with linked lists but it is expected to be rare if the number of buckets is large enough.

For instance, each entry of the hash table is composed of 6 fields for a total of 16B. In Figure 2, the "active" field indicates whether the entry is valid or not (used for fast deletion). The "segment hash" field is the 32-bit hash value of the segment identifier. The "SSD flag" field indicates whether the entire segment is stored in the secondary cache or not (in this example, the secondary cache is SSD). The "DRAM packet bitmap" indicates which packets of the segment are stored in the primary cache (in this example, the primary cache is DRAM. Finally, the DRAM segment map pointer and the *SSD segment map pointer* store a pointer to the DRAM/SSD segment map respectively.

Every hash table entry is related to a DRAM segment map and/or a SSD segment map depending on which level the packet is cached at.

The DRAM segment map primarily contains an array of K elements (i.e., the number of packets in a segment) pointing to the buffers storing the packets of a given segment. DRAM segment maps of various segments are organized as a linked list and ordered according to Least Recently Used (LRU) policy. We call this list DRAM-LRU. Every segment map also contains a Rc field counting the number of times a segment has been requested, and pointers to the previous and next segments in the DRAM-LRU.

The SSD segment map contains a pointer to the SSD address where the segment is stored, and pointers to previous and next elements. SSD segment maps of various segments are organized as a linked list and ordered according to LRU policy. We call this list SSD-LRU.

Finally, the DRAM packet pool is a lock-free pool of available pre-allocated packet buffers stored in DRAM. Whenever a packet is retrieved from the Network Interface Card (NIC) or the SSD memory, it is stored in DRAM memory by the dedicated CPU core using a free buffer of the packet pool. Conversely, when a packet is evicted from DRAM, the corresponding object is added back to the packet pool.

First, packets are extracted in batch from the Software queues (SW queues) by input/output (I/O) cores. Hardware queues (HW queues) are integrated into the NIC and I/O cores leverage on fast packet processing techniques such as Intel DPDK to receive incoming packets. SW queues are integrated into the DRAM, also known as TW/RW rings. Transferring from SW queues to HW queues (or reciprocally) is transparent to the CPU and done using Direct Memory Access (DMA) techniques leveraging a set of libraries and drivers for fast packet processing, such as Intel® DPDK. The I/O core receives the batch of packets and dispatches them to the different processing cores according to the hash value of the hash table of their segment_{ID}, computed as the integer part of packetid / N, so that packets belonging to the same segments are always assigned to the same processing core. This enables lockless operations on the data structures above described.

Processing cores extract batches of packets from software queues and process them according to their type.

If the received packet is a request, a lookup in the hash table of the segment is performed using the segment_{ID} hash value already computed. In case the segment identification data is not present in the segmented hash table the request is forwarded to the next hop. In case the segment identification is present, the processing core checks whether the packet is stored in the primary cache (DRAM) or in the secondary cache (SSD) using the DRAM packet bitmap and the SSD flag.

If the packet is stored in the primary cache (DRAM), the corresponding data packet is prepared and sent back to the requester and a request counter R_{C} is incremented. The segment entry is also moved on top of the list DRAM-LRU.

If the packet is stored in the secondary cache (SSD), the request is passed to an SSD core (associated with the secondary cache, the SSD core being a core which is dedicated to manage inpu/ouput operation with the SSD) that fetches the entire segment from the SSD. Once the segment is moved to the first level cache the request is passed back to the processing core that creates and populates the DRAM segment map. The segment map entry is then moved to the top of the DRAM-LRU and SSD-LRU, and the response is sent back to the requester. Notice that segments copied from the second to the first level of the cache are not removed from the secondary cache.

If the received packet is data and it is not already in first or second level cache of H2C, a hash table entry is created and the corresponding DRAM segment map entry is created and inserted on top of the DRAM-LRU by the target processing core. The data is then sent to the requester.

During these packet processing operations, segment eviction from the primary cache or secondary cache may be required. When the primary cache is full the segment at the tail of DRAM-LRU is evaluated. If its value R_{C} is above a predefined threshold T_{R} the segment is demoted from the primary cache to the secondary cache and placed at the top of the SSD-LRU, otherwise it is discarded. When the secondary cache is full, the element at the tail of the SSD-LRU is removed from the list; it is also removed from the hash table if it is not stored in DRAM-LRU. The rationale for selective SSD insertion mechanism is to reduce SSD writes caused by unpopular objects which degrade SSD read throughput and increase wear.

We implemented H2C integrated to an NDN forwarded as application example. Specifically, we implement H2C on a general purpose server running Linux Ubuntu 12.04 LTS and equipped with two 4-core CPUs (Intel® Xeon® E5540 2.53 GHz), 32 GB of DRAM, one dual-port 10GbE card, and two 200 GB SSD drives.

For our evaluation we connected H2C to a commercial traffic generator equipped with 10GbE interfaces via optical fibers. As evaluation workload we used a one-day trace recording 10% of the user requests served by Wikipedia website. This trace contains 8 million requests over a catalog of 1.3 millions unique items. We artificially vary the average content size from 1.5 MB to 15 MB to study the impact of different catalog sizes on H2C performance. We split content items in packets of 4 KB.

Unless otherwise specified H2C is configured with a DRAM cache of 20 GB, an SSD cache of 200 GB (100 GB on every SSD), and segments composed of K=8 consecutive packets (i.e., segments are of 32 KB each).

**Table 1**

| # SSD | T_{R} | Packet Throughput | Total hits | DRAM hits | SSD hits |
|---|---|---|---|---|---|
| 1 | 2 | 20 Gbps | 11.91 bps | 9.76 Gbps | 2.15 Gbps |
| 2 | 1 | 20 Gbps | 12.44 bps | 9.76 Gbps | 2.68 Gbps |

We first analyze the overall system throughput and report the results in Table 1; We perform our evaluation using one and two SSD drives and operating with content objects of 1.5 MB. In both cases, we selected the value of T_{R} that maximizes the overall cache throughput (DRAM + SSD) for the scenario considered. The throughput is measured as the Data rate served by H2C averaged over a 60 second period.

The most striking result is that our design can operate at line speed (20 Gbps) even with only one SSD drive, thus validating the soundness of our design. In both cases considered overall throughput is limited by the network bandwidth. In the first case, however, the SSD drive operates near to the maximum throughput that we measured in isolation (2.15 out of 2.48 Gbps). Differently, in the second case, the two SSD drives operate far from their maximum throughput (2.68 out of 4.94 Gbps). Therefore there is a margin to further increase system throughput if the network bottleneck is removed.

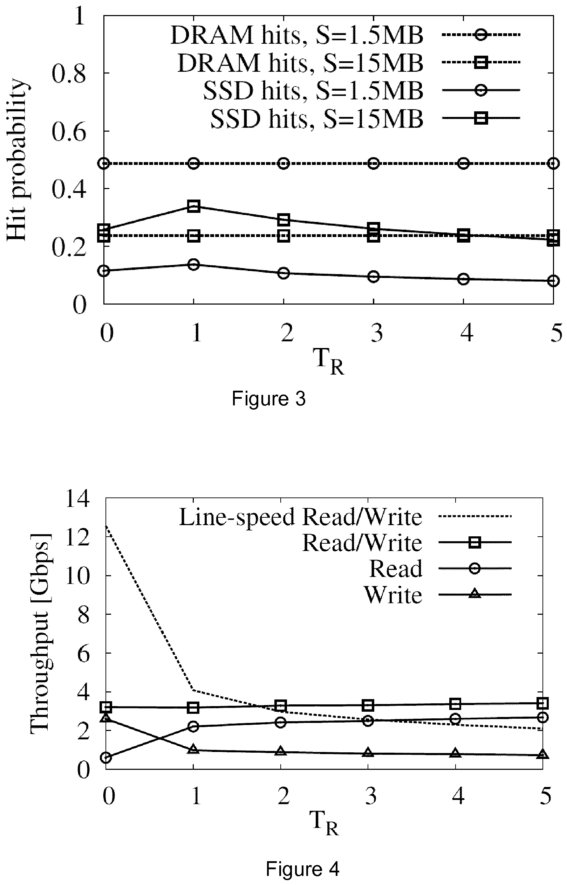

We now investigate the hit ratio of H2C, which we break down into DRAM and SSD cache hit ratio in order to understand the contribution of each caching layer. We define DRAM and SSD hit ratios as the ratios of requests served by object located respectively in DRAM and SSD caches over the total number of requests. The total hit ratio is given by the sum of DRAM and the SSD hit ratios. Fig.3 reports the hit ratio as a function of the T_{R} threshold for object sizes S of 1.5 MB and 15 MB.

We expectedly observe that the DRAM hit ratio is not influenced by variations of T_{R}, while the SSD hit ratio determines the total hit ratio shape. Increasing the T_{R} threshold from 0 to 1 improves the SSD hit ratio, as it effectively prevents one-timers (i.e. content objects requested only once) from entering the SSD cache and evicting more popular contents.

Further increasing the T_{R} threshold degrades SSD hit ratio. However, selecting greater values of T_{R} has the desirable effect of reducing SSD write load, improving SSD read bandwidth and reducing wear.

It is also interesting to notice that the second layer of the cache significantly contributes to the overall throughput, i.e., from 13% for 1.5 MB content sizes to 33% for 15 MB contents.

Finally, we analyze the SSD throughput and how it is impacted by the choice of the T_{R} threshold.

To do that, we measure the read-write workload at the SSD layer interface and then we replay it locally to bypass the network bottleneck and evaluate the performance of the SSD layer in isolation.

The results of our experiments, conducted using one single SSD, are depicted in Fig.4. Results for the multi-SSD cases can be easily obtained multiplying throughput values of the single SSD case by the number of drives.

It can be immediately noticed that the maximum read/write throughput remains fairly constant independently on the read-write mix, as expected.

The most important aspect however is the impact of T_{R} selection on read-write mix and, as a direct consequence, on read and write throughput. In fact, increasing T_{R} from 0 to 1 results in a 3.66X read throughput gain, caused by SSD write reduction triggered by selective SSD insertion. Further increasing T_{R} improves read performance but, also leads to reduced cache hits as previously noticed.

The dotted line in Fig.4 represents the cumulative read-write throughput that the SSD layer must provide for the system to operate at line speed (20 Gbps). As shown in the graph, in this configuration, for T_{R} less than or equal to 1, the system throughput is limited by SSD bandwidth, which is encumbered by a heavy write workload. For T_{R} greater than or equal to 2, the bottleneck is at the network interface. Table 1, we selected T_{R} equal to 2 for experiments with one SSD exactly because it is the value maximizing cache hits while supporting line-speed operation. In the case of two SSD drives, the available SSD bandwidth being twice as high, only T_{R} equal to 1 is required.

## Claims

1. A method for managing a multiple level cache of a host comprising a primary cache which is a volatile memory such as a DRAM memory and a secondary cache which is a non-volatile memory such as a SSD memory, the method comprising the steps of:
- dividing a content object into N segments, each of said N segments being composed of K. consecutive packets, each of the N segments being identified by a segment identification data (segment_{ID}), said packets being stored in a first portion of said primary cache and/or in a second portion of said secondary cache, said first portion and said second portion being assigned to a corresponding processing core so that packets belonging to a same segment are always assigned to the same processing core,
- building a segment hash table in order to index the packets of said N segments stored in said first portion and/or in said second portion, the entries of said segment hash table being related to a DRAM segment map pointer and/or a SSD segment map pointer depending on which portion among said first portion and said second portion a corresponding packet is cached in, the DRAM segment map pointer being configured to point to the first portion storing the packets of a given segment, the SSD segment map pointer being configured to point to the second portion storing the packets of said given segment, the DRAM segment map pointer of each of the N segments being managed as a DRAM-LRU linked list which is ordered, each of the DRAM segment map pointers containing a request counter for counting the number of times said given segment has been requested, the SSD segment pointer of each of the N segments being managed as a SSD-LRU linked list which is ordered,
- receiving a request from a requester and performing a look up in said segment hash table so as to determine if said segment identified by segment identification data (segment_{ID}) has already been built,
if said segment identification data has been computed in said segment hash table, said corresponding processing core checks whether the corresponding packet is stored in said first portion of said primary cache or in said second portion of said secondary cache,
- if the packet is stored in said first portion, said corresponding packet is sent back to said requester and said request counter is incremented, the DRAM segment map pointer entering in said DRAM-LRU linked list, the DRAM segment map pointer being prioritized by being moved on top of said DRAM-LRU linked list,
- if the packet is stored in said second portion, said corresponding packet is passed to an SSD core so as to copy the entire given segment from the secondary cache to the primary cache ; then said request is passed back to said corresponding processing core in order to create the DRAM segment map pointer for pointing to the first portion storing said corresponding packet so as to be entered in said DRAM-LRU linked list, the SSD segment map pointer being also entered in said SSD-LRU linked list, the DRAM segment map pointer and the SSD segment map pointer being respectively prioritized by being respectively moved on top of said DRAM-LRU linked list and said SSD-LRU linked list; then said corresponding packet is sent back to said requester.

2. Method according to claim 1, the method comprising :
- if the primary cache is full, evaluating the value of said request counter of the DRAM segment map pointer which is at the tail of said DRAM-LRU linked list,
- comparing the value of the request counter with a predetermined threshold T_{R},
- if the value is above said predetermined threshold, said packets of the entire segment pointed to by the DRAM segment map pointer are transferred from the primary cache to the secondary cache and the SSD segment map pointer is prioritized by being moved on top of said SSD-LRU linked list,
- if the value is below said predetermined threshold, the DRAM segment map pointer and said packets of the entire segment pointed to by the DRAM segment map pointer are respectively deleted from the primary cache and from said DRAM-LRU linked list.

3. Method according to any one of the preceding claims, the method comprising:
- if the secondary cache is full, the SSD segment map pointer of the segment to be deleted which is at the tail of said SSD-LRU linked list is deleted from said SSD-LRU linked list and from the entries of said segment hash table if there is no DRAM segment map pointer corresponding to the segment to be deleted in the DRAM-LRU linked list.

4. Method according to any one of the preceding claims, the method comprising :
- receiving a data and performing a lookup in said segment hash table so as to determine if said segment identified by segment identification data (segment_{ID}) has already been stored, if said segment identification data has not been computed in said segment hash table, an entry is created in said segment hash table and a corresponding DRAM segment map pointer is created so as to be entered and prioritized in said DRAM-LRU linked list by the assigned processing core.

5. Method according to any one of the preceding claims, wherein, when said corresponding packet is passed to an SSD core so as to copy the entire given segment comprising the said packet from the secondary cache to the primary cache, said corresponding segment is not removed from the secondary cache.

6. Method according to one of the preceding claims, wherein, if said segment identification data has not been stored in said segment hash table, said request is forwarded to a next hop.

7. Method according to one of the preceding claims, wherein the primary cache is a DRAM memory and the secondary cache is a SSD memory.

8. Method according to one of the preceding claims, wherein said DRAM-LRU linked list and said SSD-LRU linked list are ordered according to a Least Recently Used (LRU) policy.

9. Method according to one of the preceding claims, wherein :
- each of the DRAM segment map pointers further containing pointers to previous and next segments in said DRAM-LRU linked list,
- each of the SSD segment map pointers further containing pointers to previous and next segments in said SSD-LRU linked list.

10. A computer program product comprising computer-executable instructions for performing a method according to any of the claims 1 to 11.

11. A computer readable medium having a computer program comprising program instructions, the computer program being loadable into a data-processing unit and adapted to cause execution of the method according to any of the claims 1 to 9 when the computer program is run by the data-processing unit.

## Patentansprüche

1. Verfahren zum Verwalten eines Mehrlevel-Cache-Speichers eines Hosts, umfassend einen primären Cache-Speicher, wobei es sich um einen flüchtigen Speicher handelt wie einen DRAM-Speicher und einen sekundären Cache-Speicher, bei dem es sich um einen nicht-flüchtigen Speicher wie einen SSD-Speicher handelt, wobei das Verfahren die folgenden Schritte umfasst:
- Teilen eines Content-Objekts in N-Segmente, wobei jedes besagter N-Segmente zusammengesetzt ist aus K aufeinanderfolgenden Paketen, wobei jedes der N-Segmente identifiziert wird durch Segmentidentifikationsdaten (Segment_{ID}), wobei besagte in einem ersten Teil besagten primären Cache-Speichers und/oder in einem zweiten Teil besagten sekundären Cache-Speichers gespeichert werden, wobei besagter erster Teil und besagter zweiter Teil zugewiesen werden zu einem entsprechenden Verarbeitungskern, sodass die Pakete, welche zu demselben Segment gehören, immer demselben Verarbeitungskern zugewiesen werden,
- Aufbauen einer Segment-Hashtabelle, um die Pakete besagter N-Segmente zu indizieren, die in besagtem ersten Teil gespeichert sind und/oder in besagtem zweiten Teil, wobei die Einträge besagter Segment-Hashtabelle in Bezug stehen zu einem DRAM-Segment-Kartenzeiger und/oder einem SSD-Segment-Kartenzeiger, abhängig davon, in welchem Teil aus besagtem ersten Teil und besagtem zweiten Teil ein entsprechendes Paket zwischengespeichert ist, wobei der DRAM-Segment-Kartenzeiger konfiguriert ist zum Zeigen auf den ersten Teil, der Pakete eines gegebenen Segments speichert, wobei der SSD-Segment-Kartenzeiger konfiguriert ist zum Zeigen auf den zweiten Teil, der die Pakete besagten gegebenen Segments speichert, wobei der DRAM-Segment-Kartenzeiger eines jeden der N Segmente als DRAM-LRU verlinkte Liste verwaltet wird, die geordnet ist, wobei jeder der DRAM-Segment-Kartenzeiger einen Anforderungszähler enthält zum Zählen der Anzahl von Malen, die ein gegebenes Segment angefordert worden ist, wobei der SSD-Segment-Zeiger eines jeden der N-Segmente verwaltet wird als SSD-LRU verlinkte Liste, die geordnet ist,
- Empfangen einer Anforderung von einem Anforderer und Durchführen einer Durchsicht in besagter Segment-Hashtabelle, um zu bestimmen, ob besagtes Segment, das durch Segment-Identifikationsdaten (Segment_{ID}) identifiziert ist, schon aufgebaut worden ist,
wenn besagte Segment-Identifikationsdaten in besagter Segment-Hashtabelle berechnet worden sind, überprüft besagter entsprechender Verarbeitungskern, ob das entsprechende Paket in besagtem ersten Teil besagten primären Cache-Speichers gespeichert worden ist oder in besagtem zweiten Teil besagten sekundären Cache-Speichers,
- wenn das Paket in besagtem ersten Teil gespeichert ist, wird besagtes entsprechende Paket zu besagtem Anforderer zurückgesendet, und besagter Anforderungszähler wird inkrementiert, und der DRAM-Segment-Kartenzeiger geht in besagte DRAM-LRU verlinkte Liste ein, wobei der DRAM-Segment-Kartenzeiger priorisiert wird durch Bewegen an die Spitze besagter DRAM-LRU verlinkter Liste,
- wenn das Paket in besagtem zweiten Teil gespeichert ist, wird besagtes entsprechende Paket an einen SSD-Kern geleitet, um das ganze gegebene Segment von dem sekundären Cache-Speicher in den primären Cache-Speicher zu kopieren; danach wird besagte Anforderung zu besagtem Verarbeitungskern zurückgesendet, um den DRAM-Segment-Kartenzeiger zum Zeigen auf den ersten Teil, der besagtes entsprechendes Paket speichert, zu erzeugen und um in besagte DRAM-LRU verlinkte Liste eingetragen zu werden, wobei der SSD-Segment-Kartenzeiger ebenfalls in besagte SSD-LRU verlinkte Liste eingegeben wird, wobei der DRAM-Segment-Kartenzeiger und der SSD-Segment-Kartenzeiger jeweils priorisiert werden durch entsprechendes Bewegen an die Spitze besagter DRAM-LRU verlinkten Liste und besagter SSD-LRU verlinkten Liste; danach wird besagtes entsprechende Paket zurück an den Anforderer gesendet.

2. Verfahren nach Anspruch 1, wobei das Verfahren umfasst:
- wenn der primäre Cache-Speicher voll ist, Bewerten des Wertes von besagtem Anforderungszähler des DRAM-Segment-Kartenzeigers, der sich am Ende besagter DRAM-LRU verlinkten Liste befindet,
- Vergleichen des Werts des Anforderungszählers mit einem vorbestimmten Schwellenwert T_{R},
- wenn der Wert über besagtem vorbestimmten Schwellenwert liegt, werden besagte Pakete des ganzen Segments, die durch den DRAM-Segment-Kartenzeiger angezeigt werden, von dem primären Cache-Speicher auf den sekundären Cache-Speicher übertragen, und der SSD-Segment-Kartenzeiger wird priorisiert durch Bewegen an die Spitze besagter SSD-LRU verlinkten Liste,
- wenn der Wert unterhalb besagten vorbestimmten Schwellenwerts liegt, werden der DRAM-Segment-Kartenzeiger und besagte Pakete des ganzen Segments, die von dem DRAM-Segment-Kartenzeiger angezeigt werden, entsprechend von dem primären Cache-Speicher und von besagter DRAM-LRU verlinkten Liste gelöscht.

3. Verfahren nach einem beliebigen der vorhergehenden Ansprüche, wobei das Verfahren umfasst:
- wenn der sekundäre Cache-Speicher voll ist, wird der SSD-Segment-Kartenzeiger des Segments, das gelöscht werden soll, das sich am Ende besagter SSD-LRU verlinkten Liste befindet, von besagter SSD-LRU verlinkten Liste gelöscht und aus den Einträgen besagter Segment-Hashtabelle, wenn es keinen DRAM-Segment-Kartenzeiger gibt, der dem zu löschenden Segment in der DRAM-LRU verlinkten Liste entspricht.

4. Verfahren nach einem beliebigen der vorhergehenden Ansprüche, wobei das Verfahren umfasst:
- Empfangen von Daten und Durchführen einer Durchsicht in besagter Segment-Hashtabelle, um zu bestimmen, ob besagtes Segment, das durch Segmentidentifikationsdaten (Segment_{ID}) identifiziert ist, schon gespeichert worden ist, ob besagte Segmentidentifikationsdaten nicht in besagter Segment-Hashtabelle berechnet worden sind, ein Eintrag in besagter Segment-Hashtabelle erstellt worden ist und ein entsprechender DRAM-Segment-Kartenzeiger erstellt worden ist, um eingegeben zu werden und in besagter DRAM-LRU verlinkten Liste priorisiert worden ist durch den zugewiesenen Verarbeitungskern.

5. Verfahren nach einem beliebigen der vorhergehenden Ansprüche, wobei, wenn besagtes entsprechende Paket an einen SSD-Kern geleitet wird, um das ganze gegebene Segment zu kopieren, das besagtes Paket enthält, vom sekundären Cache-Speicher zum primären Cache-Speicher, wobei das entsprechende Segment nicht vom sekundären Cache-Speicher entfernt wird.

6. Verfahren nach einem der vorhergehenden Ansprüche, wobei, wenn besagte Segmentidentifikationsdaten nicht in besagter Segment-Hashtabelle gespeichert worden sind, besagte Anforderung zu einem nächsten Hop weitergeleitet wird.

7. Verfahren nach einem der vorhergehenden Ansprüche, wobei der primäre Cache-Speicher ein DRAM-Speicher ist und der sekundäre Cache-Speicher ein SSD-Speicher.

8. Verfahren nach einem der vorhergehenden Ansprüche, wobei besagte DRAM-LRU verlinkte Liste und besagte SSD-LRU verlinkte Liste geordnet sind gemäß einer Least Recently Used (LRU)-Richtlinie.

9. Verfahren nach einem der vorhergehenden Ansprüche, wobei:
- jeder der DRAM-Segment-Kartenzeiger weiterhin Zeiger umfasst für vorherige und nächste Segmente in besagter DRAM-LRU verlinkten Liste,
- jeder der SSD-Segment-Kartenzeiger weiterhin Zeiger umfasst für vorherige und nächste Segmente in besagter SSD-LRU verlinkten Liste.

10. Computer-Programmprodukt, umfassend computerausführbare Befehle zum Durchführen eines Verfahrens gemäß einem beliebigen der Ansprüche 1 bis 11.

11. Computerlesbares Medium, das ein Computerprogramm aufweist, das Programmbefehle umfasst, wobei das Computerprogramm ladbar ist auf einer Datenverarbeitungseinheit und ausgelegt ist zum Ausführen des Verfahrens nach einem beliebigen der Ansprüche 1 bis 9, wenn das Computerprogramm auf der Datenverarbeitungseinheit ausgeführt wird.

## Revendications

1. Procédé de gestion d'une antémémoire multiniveau d'un hôte comprenant une antémémoire principale constituée d'une mémoire volatile telle qu'une mémoire DRAM et une antémémoire secondaire constituée d'une mémoire non volatile telle qu'une mémoire SSD, le procédé comprenant les étapes suivantes :
- diviser un objet de contenu en N segments, chacun desdits N segments étant composé de K paquets consécutifs, chacun des N segments étant identifié par une donnée d'identification de segment (segment_{ID}), lesdits paquets étant stockés dans une première partie de ladite antémémoire principale et/ou dans une deuxième partie de ladite antémémoire secondaire, ladite première partie et ladite deuxième partie étant affectées à un coeur de traitement correspondant de façon à que les paquets appartenant à un même segment soient toujours affectés au même coeur de traitement,
- construire une table de hachage de segment afin d'indexer les paquets desdits N segments stockés dans ladite première partie et/ou dans ladite deuxième partie, les entrées de ladite table de hachage de segment étant associées à un pointeur de structure de segment de DRAM et/ou un pointeur de structure de segment de SSD en fonction de la partie parmi ladite première partie et ladite deuxième partie dans laquelle un paquet correspondant est mis en antémémoire, le pointeur de structure de segment de DRAM étant configuré pour pointer sur la première partie dans laquelle sont stockés les paquets d'un segment donné, le pointeur de structure de segment de SSD étant configuré pour pointer sur la deuxième partie dans laquelle sont stockés les paquets dudit segment donné, le pointeur de structure de segment de DRAM de chacun des N segments étant géré sous forme de liste chaînée DRAM-LRU qui est ordonnée, chacun des pointeurs de structure de segment de DRAM contenant un compteur de demande destiné à compter le nombre de fois que ledit segment donné a été demandé, le pointeur de structure de segment de SSD de chacun des N segments étant géré sous forme de liste chaînée SSD-LRU qui est ordonnée,
- recevoir une demande d'un demandeur et effectuer une recherche dans ladite table de hachage de segment de façon à déterminer si ledit segment identifié par la donnée d'identification de segment (segment_{ID}) a déjà été construit,
si ladite donnée d'identification de segment a été calculée dans ladite table de hachage de segment, ledit coeur de traitement correspondant vérifie si le paquet correspondant est stocké dans ladite première partie de ladite antémémoire principale ou dans ladite deuxième partie de ladite antémémoire secondaire,
- si le paquet est stocké dans ladite première partie, ledit paquet correspondant est renvoyé audit demandeur et ledit compteur de demande est incrémenté, le pointeur de structure de segment de DRAM entrant dans ladite liste chaînée DRAM-LRU, le pointeur de structure de segment de DRAM faisant l'objet d'une attribution de priorité en étant placé en tête de ladite liste chaînée DRAM-LRU,
- si le paquet est stocké dans ladite deuxième partie, ledit paquet correspondant est transmis à un coeur SSD de façon à copier la totalité du segment donné de l'antémémoire secondaire à l'antémémoire principale ; ladite demande est ensuite renvoyée audit coeur de traitement correspondant afin de créer le pointeur de structure de segment de DRAM destiné à pointer sur la première partie dans laquelle est stockée ledit paquet correspondant de façon à être introduit dans ladite liste chaînée DRAM-LRU, le pointeur de structure de segment de SSD étant également introduit dans ladite liste chaînée SSD-LRU, le pointeur de structure de segment de DRAM et le pointeur de structure de segment SSD faisant l'objet d'une attribution de priorité en étant placés respectivement en tête de ladite liste chaînée DRAM-LRU et de ladite liste chaînée SSD-LRU ; le paquet correspondant est ensuite renvoyé audit demandeur.

2. Procédé selon la revendication 1, le procédé comprenant les étapes suivantes :
- si l'antémémoire principale est pleine, évaluer la valeur dudit compteur de demande du pointeur de structure de segment de DRAM qui est en queue de ladite liste chaînée DRAM-LRU,
- comparer la valeur du compteur de demande à un seuil prédéterminé T_{R},
- si la valeur est au-dessus dudit seuil prédéterminé, lesdits paquets du segment entier sur lequel pointe le pointeur de structure de segment de DRAM sont transférés de l'antémémoire principale à l'antémémoire secondaire et le pointeur de structure de segment de SSD fait l'objet d'une attribution de priorité en étant placé en tête de ladite liste chaînée SSD-LRU,
- si la valeur est en dessous dudit seuil prédéterminé, le pointeur de structure de segment de DRAM et lesdits paquets du segment entier sur lequel pointe le pointeur de structure de segment de DRAM sont supprimés respectivement de l'antémémoire principale et de ladite liste chaînée DRAM-LRU.

3. Procédé selon l'une quelconque des revendications précédentes, le procédé comprenant l'étape suivante :
- si l'antémémoire secondaire est pleine, le pointeur de structure de segment de SSD du segment à supprimer qui est en queue de ladite liste chaînée SSD-LRU est supprimé de ladite liste chaînée SSD-LRU et des entrées de ladite table de hachage de segment s'il n'existe aucun pointeur de structure de segment de DRAM correspondant au segment à supprimer dans la liste chaînée DRAM-LRU.

4. Procédé selon l'une quelconque des revendications précédentes, le procédé comprenant l'étape suivante :
- recevoir une donnée et effectuer une recherche dans ladite table de hachage de segment de façon à déterminer si ledit segment identifié par la donnée d'identification de segment (segment_{ID}) a déjà été stocké, si ladite donnée d'identification de segment n'a pas été calculée dans ladite table de hachage de segment, une entrée est créée dans ladite table de hachage de segment et un pointeur de structure de segment de DRAM correspondant est créé de façon à être introduit et à faire l'objet d'une attribution de priorité dans ladite liste chaînée DRAM-LRU par le coeur de traitement affecté.

5. Procédé selon l'une quelconque des revendications précédentes, dans lequel, lorsque ledit paquet correspondant est transmis à un coeur SSD de façon à copier la totalité du segment donné comprenant ledit paquet de l'antémémoire secondaire à l'antémémoire principale, ledit segment correspondant n'est pas supprimé de l'antémémoire secondaire.

6. Procédé selon l'une des revendications précédentes, dans lequel, si ladite donnée d'identification de segment n'a pas été stockée dans ladite table de hachage de segment, ladite demande est transférée à un prochain bond.

7. Procédé selon l'une des revendications précédentes, dans lequel l'antémémoire principale est une mémoire DRAM et l'antémémoire secondaire est une mémoire SSD.

8. Procédé selon l'une des revendications précédentes, dans lequel ladite liste chaînée DRAM-LRU et ladite liste chaînée SSD-LRU sont ordonnées selon un algorithme LRU (Least Recently Used).

9. Procédé selon l'une des revendications précédentes, dans lequel :
- chacun des pointeurs de structure de segment de DRAM contient en outre des pointeurs vers les segments précédents et suivants dans ladite liste chaînée DRAM-LRU,
- chacun des pointeurs de structure de segment de SSD contient en outre des pointeurs vers les segments précédents et suivants dans ladite liste chaînée SSD-LRU.

10. Produit-programme informatique comprenant des instructions exécutables sur ordinateur destiné à mettre en oeuvre un procédé selon l'une quelconque des revendications 1 à 11.

11. Support lisible par un ordinateur contenant un programme informatique comprenant des instructions de programme, le programme informatique pouvant être chargé dans une unité de traitement de données et adapté pour entraîner l'exécution du procédé selon l'une quelconque des revendications 1 à 9 lorsque le programme informatique est exécuté par l'unité de traitement de données.
